Europäisches Patentamt

(19) European Patent Office

Office européen des brevets

(11) EP 0 953 439 A2

## (12) EUROPEAN PATENT APPLICATION

(43) Date of publication:
03.11.1999 Bulletin 1999/44

(51) Int. Cl.⁶: $B32B\ 3/12$, $B32B\ 31/04$, $F24J\ 2/46$

(21) Application number: 99108287.6

(22) Date of filing: 27.04.1999

(84) Designated Contracting States:
AT BE CH CY DE DK ES FI FR GB GR IE IT LI LU MC NL PT SE
Designated Extension States:
AL LT LV MK RO SI

(30) Priority: 28.04.1998 JP 11841198

(71) Applicant:
JAPAN AIRCRAFT MFG. CO., LTD
Yokohama-shi Kanagawa (JP)

(72) Inventors:
• Motoike, Makoto
  Yokohama-shi, Kanagawa pref. (JP)
• Iwahori, Yutaka
  Chigasaki-shi, Kanagawa pref. (JP)
• Tanaka, Takayoshi
  Yokohama-shi, Kanagawa pref. (JP)

(74) Representative:
Howden, Christopher Andrew
FORRESTER & BOEHMERT
Franz-Joseph-Strasse 38
80801 München (DE)

### (54) Honeycomb panel and manufacturing method thereof

(57) The present invention relates to a honeycomb panel utilized as a structural material of an aircraft and an instrument that is mounted on the aircraft, for example. In the honeycomb panel in which the extremely thin surface panels are used, hollows which individually correspond to the cells occur. In case that the hollows occur on the surface panels, external appearance of a product gets worse extremely. Also, quality of the product is lowered significantly. Furthermore, since cross sectional shape is not constant, required strength and rigidity cannot be obtained. The objective of the present invention is to provide a honeycomb panel in which, even in case of using thin surface plates, hollows do not exist on the thin surface plates. The tasks were solved by a honeycomb panel including: a honeycomb core; a pair of surface plates disposed so as to sandwich the honeycomb core therebetween; and an adhesive layer for joining the honeycomb core to the surface plates, wherein the adhesive layer is provided on an entire area of a surface in the surface plates on a side where the layer abuts to the honeycomb core.

EP 0 953 439 A2

## Description

## BACKGROUND OF THE INVENTION

The present invention relates to a honeycomb panel utilized as a structural material of an aircraft and an instrument that is mounted on the aircraft, for example, and to a honeycomb panel utilized as a structural material of an object that soars or flies in the air. Also, the present invention relates to a honeycomb panel utilized as a structural material of an instrument that is used in the space. Furthermore, the present invention relates to a honeycomb panel utilized as a structural material of an instrument of which weight is preferably light in particular, out of instruments that are used on the ground.

The honeycomb panel has light weight, but extremely high strength and high rigidity. Accordingly, the honeycomb panel widely spreads as a structural material for an aircraft and so forth. Especially, presently utilization thereof as a substrate in the space, on which a huge number of solar generating elements are set, is being investigated.

By the way, in case of utilizing the honeycomb panel as the substrate of the solar generating elements, strength or rigidity of the honeycomb panel is not required so much. In other words, it is enough for the honeycomb panel to be able to stably support the solar generating elements in the space. And, instead of the strength or rigidity, it becomes to be most important for the honeycomb panel to have light weight. Therefore, it is preferable to use thin plates as much as possible for surface plates that constitute the honeycomb panel.

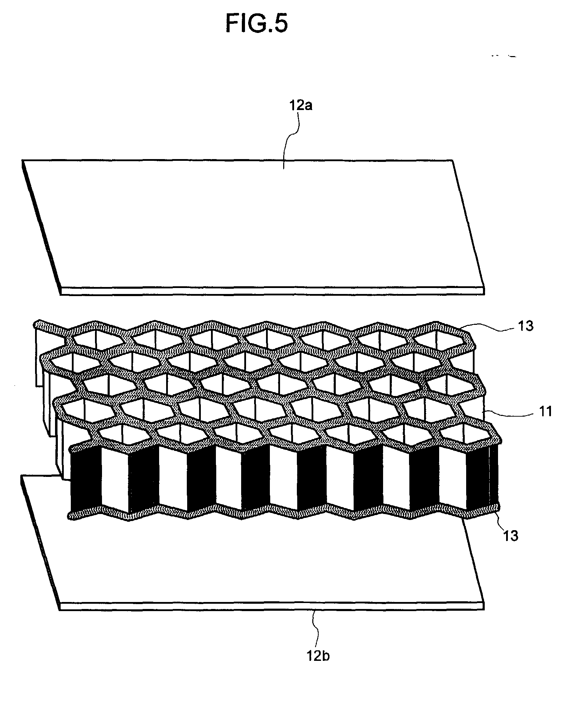

Here, by referring to Fig. 5, structure of the honeycomb panel in which extremely thin surface plates are used will be explained. In Fig. 5, however, the honeycomb panel is shown with components thereof separated from each other.

As seen from Fig. 5, a honeycomb core 11 and a pair of surface plates 12a and 12b are provided with the conventional honeycomb panel. The honeycomb core 11 out of these components has structure in which cells are arranged in planar shape, each of which cross section is an equilateral hexagon. Also, the surface plates 12a and 12b are disposed so as to sandwich this honeycomb core 11 therebetween from the upper and lower sides. Furthermore, the honeycomb core 11 is formed of an aluminum alloy having a comparatively large coefficient of thermal expansion or a material called Nomex. On the other hand, the surface plates 12a and 12b are made of a CFRP (carbon fiber reinforced plastic) having a small coefficient of thermal expansion. Especially, a thickness of the surface plates 12a and 12b is about 0.1 mm. And, the honeycomb core 11 and the surface plates 12a and 12b are joined to each other by using epoxy resin adhesives 13 that are disposed at edges of the honeycomb core 11.

The honeycomb panel using such extremely thin surface plates has remarkably light weight compared with a usual honeycomb panel, and therefore, is preferable especially for the substrate of the above-described solar generating elements. On the other hand, however, the honeycomb panel has the following task.

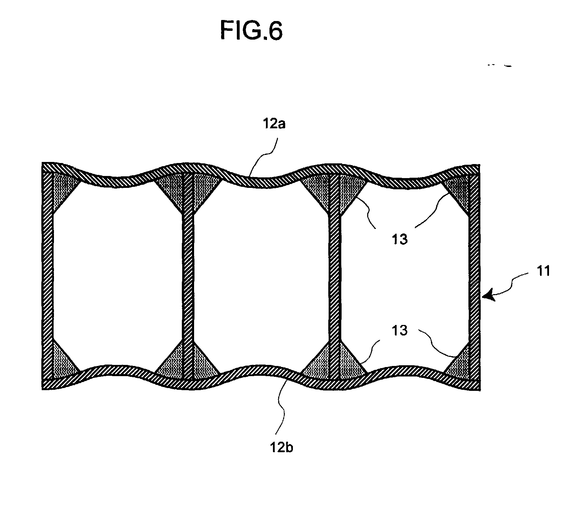

Namely, in the honeycomb panel in which the extremely thin surface panels 12a and 12b are used, hollows which individually correspond to the cells occur. Condition in which the hollows occur on the surface panels 12a and 12b is shown in Fig. 6. As shown in Fig. 6, in case that the hollows occur on the surface panels 12a and 12b, external appearance of a product gets worse extremely. Also, quality of the product is lowered significantly. Furthermore, since cross sectional shape is not constant, required strength and rigidity cannot be obtained.

In addition, if size of the cells of the honeycomb core 11 makes to be smaller, the hollows are difficult to occur on the surface plates 12a and 12b even though the surface plates are extremely thin. However, to make the cells to be small-sized ones immediately results in increase of the weight of the honeycomb core. Accordingly, the above-described task cannot be solved by means of this method.

Also, in the prior art, there is also a task with respect to manufacturing work. In other words, conventionally, work for making adhesives adhere to only edges of the honeycomb core 11 was necessary. However, this work required much time. Accordingly, productivity was low, and high manufacturing cost was needed.

## SUMMARY OF THE INVENTION

Therefore, the objective of the present invention is to solve the above-mentioned tasks.

Also, the objective of the present invention is to provide a honeycomb panel in which, even in case of using thin surface plates, hollows do not exist on the thin surface plates. Moreover, the objective of the present invention is to provide a manufacturing method of a honeycomb panel, in which manufacturing work is easily conducted and productivity becomes to be excellent.

In order to solve the above-described tasks, inventors of the present inventions have eagerly proceeded with a study. And, as a result, the inventors have ascertained the cause at last, by which the above-described defect occurs in the honeycomb panel. The cause is as follows:

The honeycomb panel is manufactured by ① making adhesives adhere to edges of the honeycomb core, ② providing surface plates so as to sandwich the honeycomb core therebetween from upper and lower sides, and ③ applying heat treatment thereto under pressurized condition. By the way, in this heat treatment, shrinkage occurs in the adhesives. Then, a part in the surface plates to which the adhesives are adhering is pulled toward a wall surface side of the cells of the honeycomb core. As a result, regions corresponding the respective cells on the surface plates are depressed so that the center of each region has the largest displacement.

Also, in addition to this, by a difference of coefficients of thermal expansion between the surface plates and the honeycomb core, a compression force acts on the surface plates. And, as a result, hollows of the surface plates further become larger.

Accordingly, the inventors considered that the hollows did not occur in the surface plates if the adhesives that was shrinking did not pull a part of the surface plates toward a wall surface side of the cells, that is to say, to an oblique direction. The inventors further proceeded with the study based on such an technical idea. And, at last, the inventors found that the adhesives might be provided not only on a part corresponding to the edges of the honeycomb core but also over an entire region of the surface plates. Namely, if the adhesives are provided on parts corresponding to respective openings of the above-described cells, a compression force does not locally collect when the adhesives shrink. In other words, the compression force is dispersed along a plane, and the hollows on the surface plates do not occur.

Also, the inventors found the following manufacturing method capable of improving productivity of the honeycomb panel having the above-described structure. In other words, for improving the productivity, the adhesives can be formed in the shape of a sheet, and can be sandwiched between the honeycomb core and the surface plates. By this arrangement, compared with the case in which the adhesives are applied, manufacturing work is simplified. Therefore, the productivity can be significantly improved.

The present invention is created on the basis of such new knowledge.

Therefore, the above-described tasks are solved by a honeycomb panel including: a honeycomb core; a pair of surface plates disposed so as to sandwich the above-described honeycomb core therebetween; and an adhesive layer for joining the above-described honeycomb core to the above-described surface plates, wherein the above-described adhesive layer is provided on an entire area of a surface in the above-described surface plates on a side where the above-described layer abuts to the above-described honeycomb core.

Also, the above-described tasks are solved by a manufacturing method of a honeycomb panel including: a honeycomb core; a pair of surface plates disposed so as to sandwich this honeycomb core therebetween; and an adhesive layer for joining the above-described honeycomb core to the above-described surface plates, wherein the above-described adhesive layer is provided on an entire area of a surface in the above-described surface plates on a side where the above-described layer abuts to the above-described honeycomb core, and the method including steps of: laminating the above-described surface plates, the above-described honeycomb core and an adhesive sheet so that the above-described adhesive sheet is sandwiched between the above-described surface plates and the above-described honeycomb core; and heating a laminated body in which the above-described surface plates, the above-described honeycomb core and the above-described adhesive sheet are laminated, and joining the above-described surface plates to the above-described honeycomb core.

In addition, in the present invention, in order to further improve quality, that is to say, in order to make final condition of the surface plates smooth as much as possible, the adhesive layer can have a uniform thickness.

Also, a thermosetting epoxy resin can be used for the above-described adhesive. On the other hand, plates formed of a fiber reinforced composite material are used for the above-described surface plates.

Furthermore, with respect to the above-described manufacturing method, in order to further improve quality of a product (particularly, in order to reduce compression stress as much as possible, which acts along surfaces of the surface plates due to a difference of coefficients of thermal expansion between the surface plates and the honeycomb core, and to further improve smoothness of the surface plates), temperature at which the laminated body is heated in the joining step is preferably 80 to 100 °C, and especially 80 to 85 °C.

Here, the heat treatment of the laminated body in the above-described joining step will be explained.

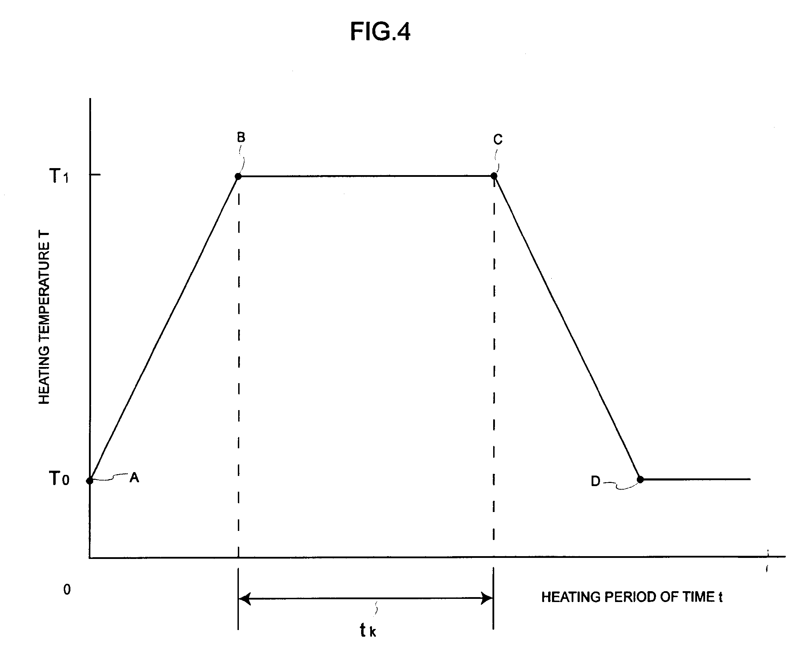

A relation between heat (heat treatment) temperature $T$ and a heat period of time $t$ for the laminated body is shown in a graph of Fig. 4. In other words, the heat treatment starts from temperature prior to the heat treatment, which is shown as $T_0$ in the graph, that is to say, from room temperature (15 to 20 °C) (hereinafter, the temperature prior to the heat treatment is referred to the room temperature.). Temperature goes up from the room temperature $T_0$ (a point A) at a constant ratio, and then, reaches defined temperature $T_1$ (a point B). And, the temperature is maintained at the defined temperature $T_1$ for a constant period of time. Thereafter, the temperature goes down from the defined temperature $T_1$ (a point C) at a constant ratio, and returns to the room temperature $T_0$ (a point D) again. The temperature in the joining step, which is preferably 80 to 100 °C, and especially 80 to 85 °C as mentioned above, means the defined temperature $T_1$. Therefore, the above-described heat treatment basically means treatment which is applied between the points B and C in the graph of Fig. 4.

For example, a heat period of time (a period of time from the point B to the point C) $t_k$ depends on the above-described defined temperature $T_1$. In other words, there is a correlated relation between the heat period of time and the defined temperature. More particularly, a relation is established between the defined temperature $T_1$ and the heat period of time $t_k$, which is expressed by the following equation:

$$\ln t_k = a + E/(RT_1)$$

where "a" is a constant depending on a material, "E" is an activation energy depending on a material, and "R" is a gas constant. Also, the unit of the defined temperature $T_1$ is K, and the unit of the heat period of time $t_k$ is a second.

For example, in case that the defined temperature $T_1$ is 80 °C, the heat period of time $t_k$ is about 960 minutes (about 16 hours). Also, in case that the defined temperature $T_1$ is 90 °C, the heat period of time $t_k$ is about 450 minutes (about 7.5 hours). And, in case that the defined temperature $T_1$ is 100 °C, the heat period of time $t_k$ is about 300 minutes (about 5 hours).

In addition, here, the temperature $T_0$ prior to the heat treatment is assumed to be the room temperature. However, it goes without saying that this temperature $T_0$ prior to the heat treatment is arbitrary temperature. In other words, in case that the temperature $T_0$ is set higher, the defined temperature $T_1$ will be also set near temperature close to an upper limit. Therefore, in the manufacturing method of the honeycomb panel of the present invention, it is also, in a sense, preferable that a difference between the defined temperature $T_1$ and the temperature $T_0$ prior to the heat treatment is 65 to 80 °C.

## BRIEF DESCRIPTION OF THE DRAWINGS

This and other objects, features and advantages of the present invention will become more apparent upon a reading of the following detailed description and drawings, in which:

Fig. 1 is a cross sectional view of a honeycomb panel in accordance with an embodiment of the present invention;
Fig. 2 is a perspective view showing components of the honeycomb panel in accordance with an embodiment of the present invention;
Fig. 3 is a graph showing a relation between load and deflection in an embodiment and a control;
Fig. 4 is a graph showing a relation between heat temperature and a heat period of time for a laminated body;
Fig. 5 is a perspective view showing structure of a conventional honeycomb panel; and
Fig. 6 is a cross sectional view of the conventional honeycomb panel.

## DESCRIPTION OF THE EMBODIMENTS

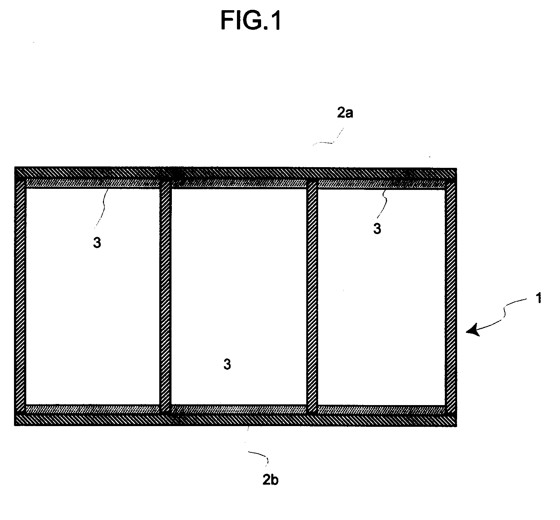

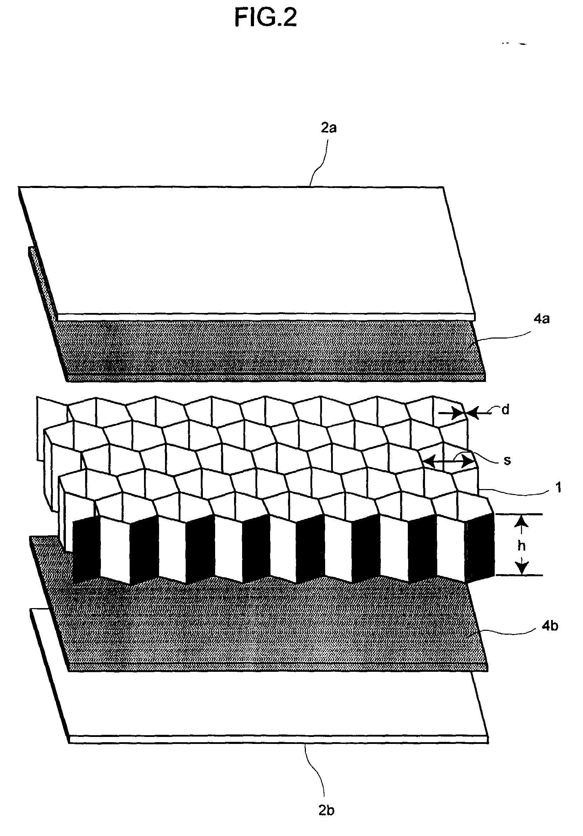

Below, by referring to Fig. 1 and Fig. 2, one embodiment of the present invention will be explained in detail. Here, Fig. 1 is a cross sectional view of a honeycomb panel in this embodiment, and Fig. 2 is a perspective view showing components of the honeycomb panel in this embodiment. However, Fig. 2 shows condition prior to heat treatment. It goes without saying that the components cannot be separated from each other after the heat treatment.

Now, as understood from Fig. 1 and Fig. 2, a honeycomb panel of this embodiment is constructed of a honeycomb core 1, a pair of surface plates 2a and 2b, and an adhesive layer 3. In other words, the pair of surface plates 2a and 2b are disposed so as to sandwich the honeycomb core 1 therebetween from upper and lower sides. Also, the adhesive layer 3 joins the honeycomb sore 1 to the surface plates 2a and 2b.

The honeycomb core 1 out of these components has structure in which a number of cells are arranged in planar shape, each of which cross section is an equilateral hexagon. Here, a honeycomb core formed of an aluminum alloy is used for this honeycomb core 1.

On the other hand, the surface plates 2a and 2b are made of a CFRP (carbon fiber reinforced plastic). Also, a thickness of the surface plates is about 0.1 mm. And, in this embodiment, epoxy resin is used for an adhesive for joining the honeycomb core 1 to the surface plates 2a and 2b. In other words, the above-described adhesive layer 3 is the shrunk and hardened epoxy resin.

By the way, in the honeycomb panel of this embodiment, the adhesive layer 3 is provided on an entire area of a surface in the surface plates 2a and 2b on a side where the layer abuts to the honeycomb core 1, and has a uniform thickness. Especially, the adhesive layer 3 is provided on parts corresponding to openings of cells constituting the honeycomb core 1, and has a uniform thickness. As shown in Fig. 2, actually, the above-described adhesive layer 3 is obtained by sandwiching adhesive sheets 4a and 4b between the honeycomb core 1 and the surface plates 2a and 2b, respectively, and heating them under pressurized condition, although this arrangement will be explained in detail below.

Next, a manufacturing method of the above-described honeycomb panel will be explained.

In manufacturing the above-described honeycomb panel, first, the adhesive sheets 4a and 4b are sandwiched between the honeycomb core 1 and the surface plates 2a and 2b, respectively. In other words, the surface plates 2a and 2b, the honeycomb core 1, and the adhesive sheets 4a and 4b are laminated as shown in Fig. 2 (a laminating step).

After the laminating step is completed, a laminated body in which the surface plates 2a and 2b, the honeycomb core 1, and the adhesive sheets 4a and 4b are laminated is heated under a predetermined pressure (1.75 atmospheric pressures, for example). Especially, the adhesive sheets 4a and 4b are shrunk and hardened by heating them at 80 to 100 °C for a constant period of time (temperature prior to the heat treatment is 15 to 20 °C, however.).

Accordingly, the adhesive sheets 4a and 4b become to be the adhesive layer 3 having a uniform thickness. And, as a result, the surface plates 2a and 2b and the honeycomb core 1 are strongly joined to each other (a joining step). In addition, in this condition, the adhesive does not almost remain between upper and lower edges of the honeycomb core 1 and the surface plates 2a and 2b.

As mentioned above, in this embodiment, the adhesive layer 3 is provided on an entire area of a surface in the surface plates 2a and 2b where the layer abuts to the honeycomb core 1. Accordingly, when the adhesive is shrunk and hardened, a shrinkage force thereof does not collect only at a specific position. In other words, a part of the surface plates 2a and 2b is not pulled toward a wall surface side of the cells of the honeycomb core 1. That is to say, the shrinkage force is dispersed along a plane. As a result, even though the surface plates 2a and 2b are extremely thin, hollows do not occur on the surface plates. Therefore, the honeycomb panel with high quality and having good external appearance can be obtained. Furthermore, since this honeycomb panel has constant cross sectional shape, it provides required strength and rigidity. And, this means that, if strength and rigidity of the honeycomb panel may be the same as those of the conventional one, it is possible to make size of the cells to be larger, that is to say, to reduce the number of the cells. Accordingly, it is possible to realize the light-weighted honeycomb panel.

Also, in the present embodiment, the adhesive is formed in the shape of a sheet, and set so as to be sandwiched between the honeycomb core 1 and the surface plates 2a and 2b. Accordingly, compared with the case in which the adhesive is applied to the honeycomb core 1, manufacturing work is significantly simplified. As a result, productivity is drastically improved, and reduction of manufacturing cost can be realized. Furthermore, in this embodiment, the heat treatment is conducted at 80 to 100 °C. Accordingly, by a synergistic effect with an arrangement that the adhesive layer 3 is provided on the entire area of the surface plates 2a and 2b, the honeycomb panel has an extremely smooth surface.

In addition, the present invention is not limited to the above-described embodiment. The present invention can be worked by adding an appropriate change within a scope of the technical idea thereof.

[Example]

The honeycomb panel in relation to the above-described embodiment has been manufactured under the following conditions:

Material of the surface plates: CFRP (carbon fiber reinforced plastic)
Thickness of the surface plates: 0.06 mm
Length of the surface plates (length of the honeycomb panel): 800 mm
Width of the surface plates (width of the honeycomb panel): 300 mm
Material of the honeycomb core: Aluminum alloy (JIS 5056 material)
Cell size of the honeycomb core(parallel width of an equilateral hexagon/s in Fig. 2): 9.525 mm (3/8 inches)
Height of the honeycomb core (h in Fig. 2): 20 mm
Leaf thickness of the honeycomb core (d in Fig. 2): 0.018 mm (7/10000 inches)
Kind of the adhesive: Epoxy resin (made by CYTEC corporation, name of goods "FM24")
Thickness of the adhesive sheet: 0.13 mm
Pressure during the heat treatment: 1.75 kg/cm$^2$
Temperature during the heat treatment: 80 °C
Period of time for the heat treatment: 16 hours

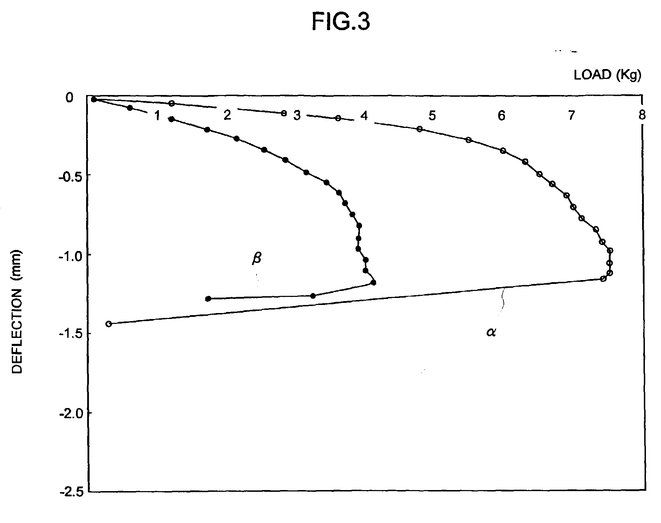

With regard to the honeycomb panel manufactured under the above-described conditions, load and deflection that act on the honeycomb panel was studied. A result thereof is shown in Fig. 3 using a symbol ○ (a broken line α).

On the other hand, for comparison, with regard to the honeycomb panel having the conventional structure (in which the adhesive exists only near edges of the honeycomb core), the same test was conducted. A result thereof is shown also in Fig. 3 using a symbol ● (a broken line β).

In addition, for the measurement of the deflection, a method (four points deflection test/based on ASTM C393) was used, in which the deflection of an object to be tested is measured when both ends of the object to be tested are supported from a lower side and load is applied from an upper side to two points that sandwich a center of the object to be tested. In this connection, a distance between the supporting points is 640 mm, and on the other hand, a distance between points on which the load acts (a distance between tips of a jig which applies the load to the object to be tested) is 213 mm.

[Evaluation]

The honeycomb panel of this embodiment has not only good external appearance and high quality, but also remarkably excellent strength and rigidity compared with those of the honeycomb panel having the conventional structure.

[Effect of the present invention]

According to the present invention, a honeycomb panel can be provided, in which, even though the surface plates are thin, hollows do not occur in the surface plates, and which has good external appearance. Moreover, since the honeycomb panel has constant cross sectional shape, required strength and rigidity can be obtained. Also, since manufacturing work is easily conducted and productivity of the honeycomb panel is excellent, reduction of manufacturing cost can be realized.

The features disclosed in the foregoing description, in the claims and/or in the accompanying drawings may, both separately ad in any combination thereof, be material for realising the invention in diverse forms thereof.

## Claims

1. A honeycomb panel comprising:

   a honeycomb core;
   a pair of surface plates disposed so as to sandwich said honeycomb core therebetween; and
   an adhesive layer for joining said honeycomb core to said surface plates,
   wherein
   said adhesive layer is provided on an entire area of a surface in said surface plates on a side where said layer abuts to said honeycomb core.

2. A honeycomb panel according to claim 1, wherein said adhesive layer has a uniform thickness.

3. A honeycomb panel according to claim 1, wherein a thermosetting epoxy resin is used for said adhesive.

4. A honeycomb panel according to claim 2, wherein a thermosetting epoxy resin is used for said adhesive.

5. A honeycomb panel according to claim 1, wherein a fiber reinforced composite material is used for said surface plates.

6. A honeycomb panel according to claim 2, wherein a fiber reinforced composite material is used for said surface plates.

7. A honeycomb panel according to claim 3, wherein a fiber reinforced composite material is used for said surface plates.

8. A honeycomb panel according to claim 4, wherein a fiber reinforced composite material is used for said surface plates.

9. A manufacturing method of a honeycomb panel comprising:

a honeycomb core;
a pair of surface plates disposed so as to sandwich said honeycomb core therebetween; and
an adhesive layer for joining said honeycomb core to said surface plates,
wherein
said adhesive layer is provided on an entire area of a surface in said surface plates on a side where said layer abuts to said honeycomb core,
said method comprising steps of:

   laminating said surface plates, said honeycomb core and an adhesive sheet so that said adhesive sheet is sandwiched between said surface plates and said honeycomb core; and
   heating a laminated body in which said surface plates, said honeycomb core and said adhesive sheet are laminated, and joining said surface plates to said honeycomb core.

10. A manufacturing method of a honeycomb panel according to claim 9, wherein temperature at which said laminated body is heated in said joining step is 80 to 100 °C.

# FIG.1

2a

3

3

3

1

3

2b

# FIG.2

# FIG.3

# FIG.4

EP 0 953 439 A2

# FIG.5

12a

13

11

13

12b

# FIG.6

12a

13

11

13

12b